# EUROPEAN PATENT SPECIFICATION

(11) **EP 3 626 516 B1**
(45) Date of publication and mention of the grant of the patent: **21.04.2021**
(21) Application number: 19195782.8
(22) Date of filing: 06.09.2019
(51) Int. Cl.: F16D 51/22, B60N 2/16, B60N 2/18, B60N 2/22, B60N 2/225, B60N 2/90

(54) **BRAKE DEVICE FOR MOTOR VEHICLE SEAT**
BREMSVORRICHTUNG FÜR EINEN KRAFTFAHRZEUGSITZ
DISPOSITIF DE FREINAGE POUR SIÈGE DE VÉHICULE À MOTEUR

(30) Priority: 14.09.2018 JP 2018172036
(43) Date of publication of application: 25.03.2020
(73) Proprietor: TF-Metal Co., Ltd., Kosai-shi, Shizuoka 431-0304 (JP)
(72) Inventor: KANAZAWA, Takaya, Kosai-shi, Shizuoka 431-0304 (JP)
(74) Representative: Grünecker Patent- und Rechtsanwälte PartG mbB

(56) References cited:
- EP-A1- 3 330 123
- JP-A- 2018 090 238

## Description

### BACKGROUND

The present invention relates generally to a brake device for a motor vehicle seat, and particularly to a brake device for a motor vehicle seat which is mounted in a seat lifter mechanism or a seat recliner mechanism, wherein the seat lifter mechanism is structured to adjust a height position of a seat base of the motor vehicle seat, and the seat recliner mechanism is structured to adjust an angular position of a seat back of the motor vehicle seat.

Japanese Patent Application Publication No. 2018-090238 (JP 2018-090238 A) discloses a brake device for a motor vehicle seat, which is mounted in a seat lifter mechanism or seat recliner mechanism, and includes a brake mechanism section and a drive mechanism section that are arranged in an axial direction, and provided with a common pinion shaft. The brake mechanism section is of a frictional type. The drive mechanism section is structured to release the brake mechanism section from its braked and locked state. The brake mechanism section includes a housing, and first and second braking components that are arranged in a brake drum part of the housing. Each braking component includes a pair of lock plates (referred to as clamp members) arranged opposite to each other with respect to the pinion shaft, and a lock spring disposed between the lock plates to bias the lock plates away from each other.

### SUMMARY

The brake device described above holds the brake mechanism section in its braked and locked state by friction between the brake drum part and braking and locking surfaces of each lock plate. In case that the brake device is mounted in the seat lifter mechanism, repeated input of a load to a seat base due to vehicle vibration and others may cause a change in height position of the seat base against the friction. Specifically, after the height position of the seat base of the motor vehicle seat is adjusted to a specific point by the seat lifter mechanism, for example, one month after the adjustment, the height position of the seat base may have descended significantly from the specific point.

In view of the foregoing, it is desirable to provide a brake device for a motor vehicle seat which is further improved in braking performance

The brake device according to the invention comprises the features of claim 1.

According to one or more embodiments, a brake device for a motor vehicle seat, includes: a braking section structured to hold a pinion shaft in a braked and locked state to resist an external torque inputted through the pinion shaft; and an operating section structured to release the pinion shaft from the braked and locked state, and rotate the pinion shaft, wherein the braking section and the operating section are arranged in an axial direction; wherein: the braking section includes: a housing including an inner periphery including a braking surface; the pinion shaft arranged at a central position of the housing; a first braking component structured to hold the pinion shaft in the braked and locked state, and including: first and second lock plates arranged opposite to each other with respect to the pin ion shaft in the housing, wherein each of the first and seco nd lock plates has a substantially semicircular shape, and includes first and second ends, and wherein each of the first and second ends includes a braking and locking surface structured to be in contact with the braking surface of the housing; and a lock spring disposed between the second end of the first lock plate and the second end of the second lock plate, and structured to apply a biasing force to bias the second end of the first lock plate and the second end of the second lock plate away from each other; and a drive wheel structured to be operated by the operating section to rotate one of the first and second lock plates in a direction to release the pinion shaft from the braked and locked state against the biasing force of the lock spring, and rotate the pinion shaft; the pinion shaft includes a rectangular shaft part disposed between the first and second lock plates, wherein the rectangular shaft part includes an acting surface structured to be in contact with the first lock plate; the first lock plate includes an inner peripheral surface including first and second protrusions structured to be in contact with the acting surface of the rectangular shaft part of the pinion shaft at corresponding ones of two contact points that are opposite to each other along a center line with respect to a center of the pinion shaft, wherein the center line is a line evenly dividing a space between the first lock plate and the second lock plate; the first lock plate is structured to hold the pinion shaft in the braked and locked state by pressing contact between the braking and locking surfaces of the first lock plate and the braking surface of the housing and pressing contact between the first protrusion of the first lock plate and the acting surface of the rectangular shaft part of the pinion shaft, under the biasing force of the lock spring; the acting surface of the rectangular shaft part of the pinion shaft includes a crest line corresponding in position to the center of the pinion shaft, and an inclined surface that descends from the crest line toward a radially outward end of the rectangular shaft part; and the inclined surface is set to satisfy a mathematical expression of θ1 < θ2, wherein: θ1 represents an angle between the center line and a first line, wherein the first line connects the center of the pinion shaft with an initial contact point between the braking and locking surface of the second end of the first lock plate and the braking surface of the housing when the braking and locking surface of the second end of the first lock plate is pushed by the acting surface of the rectangular shaft part of the pinion shaft; and θ2 represents an angle between the center line and a direction of a resultant force of a pressing force, a first restoring force, and a second restoring force, wherein the pressing force is a force applied from the acting surface of the rectangular shaft part of the pinion shaft to the first protrusion of the first lock plate under the external torque inputted to the pinion shaft, wherein the first restoring force is a force applied from the braking surface of the housing to the braking and locking surface of the first end of the first lock plate under application of the pressing force, and wherein the second restoring force is a force applied from the braking surface of the housing to the braking and locking surface of the second end of the first lock plate under application of the pressing force. The brake device may be configured such that: the rectangular shaft part of the pinion shaft has a shape symmetric about the center line; the first lock plate is structured to be inclined by a first angle with respect to the center line by the biasing force of the lock spring such that one of the first and second protrusions of the first lock plate farther from the lock spring is in contact with the acting surface of the rectangular shaft part of the pinion shaft, when the pinion shaft is held in the braked and locked state; and the inclined surface of the acting surface has an inclination angle greater than the first angle. The brake device may be configured such that the second lock plate is structured similar to the first lock plate such that the first lock plate and the second lock plate are symmetric with respect to the center line. The brake device may further include a second braking component structured similar to the first braking component such that the first braking component and the second braking component are symmetric with respect to a line perpendicular to the center line, and the second braking component includes a lock spring located opposite to the lock spring of the first braking component, wherein the first braking component and the second braking component are arranged in the axial direction in the housing.

### BRIEF DESCRIPTION OF THE DRAWINGS

FIG. 1 is a perspective view of a motor vehicle seat provided with a seat lifter mechanism and a seat recliner mechanism as seat adjusters, according to a first embodiment.
FIG. 2 is a front view of a brake device employed by the seat lifter mechanism shown in FIG. 1 as viewed from a front side of a motor vehicle when the motor vehicle seat is mounted in the motor vehicle, according to the first embodiment.
FIG. 3 is a left side view of the brake device shown in FIG. 2.
FIG. 4 is a left side view of the brake device shown in FIG. 3 as a lever bracket is removed from the brake device.
FIG. 5 is a sectional view of the brake device taken along a plane indicated by a line A-A in FIG. 3.
FIG. 6 is an exploded perspective view of components of a braking section and components of an operating section of the brake device shown in FIG. 2.
FIG. 7 is an enlarged perspective view of a pinion shaft shown in FIG. 6.
FIG. 8 is an illustrative view of the braking section shown in FIG. 6 when in its neutral state.
FIG. 9 is an enlarged view of a region indicated by Q in FIG. 8.
FIG. 10 is an enlarged view of a holder plate shown in FIG. 6.
FIG. 11 is an illustrative schematic view of the braking section shown in FIG. 8.
FIG. 12 is an illustrative view of the operating section shown in FIG. 6 when in its neutral state.
FIG. 13 is an illustrative schematic view of the braking section when an operation lever is rotated from the neutral state shown in FIG. 11.
FIG. 14 is an illustrative view of the operating section when the operation lever is rotated from the neutral state shown in FIG. 12.
FIG. 15 is an illustrative view showing a relationship among forces under a condition that an external torque is inversely inputted to the pinion shaft in the state shown in FIG. 8.
FIG. 16 is an illustrative view showing details of the relationship among forces while schematically showing the structure shown in FIG. 15.
FIG. 17 is an enlarged view of a region indicated by Q1 in FIG. 16.
FIG. 18 is an illustrative view showing details of a relationship among forces for a braking section according to a comparative example.
FIG. 19 is an enlarged view of a region indicated by Q2 in FIG. 18.

### DETAILED DESCRIPTION

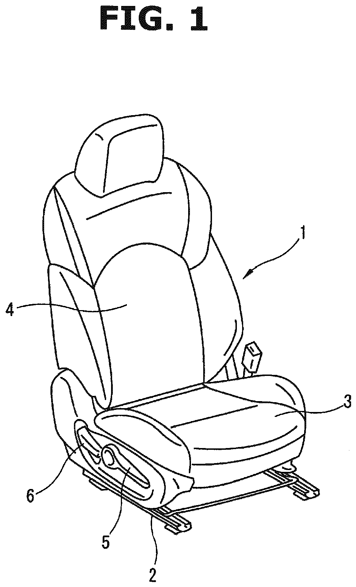

FIG. 1 shows a motor vehicle seat provided with seat adjusters, according to a first embodiment. As shown in FIG. 1, a seat 1 is provided with a seat slide mechanism 2, a seat lifter mechanism, and a seat recliner mechanism as seat adjusters. The seat slide mechanism 2 is structured to adjust a fore-and-aft position of the seat 1. The seat lifter mechanism is structured to adjust a height position of a seat cushion 3 as a seat base of the seat 1. The seat recliner mechanism is structured to adjust an angular position of a seat back 4 of the seat 1. At a side part of the seat cushion 3, an operation lever 5 and an operation lever 6 are arranged for operation of the seat lifter mechanism and operation of the seat recliner mechanism, respectively.

With regard to the seat lifter mechanism, as the operation lever 5 is raised from a neutral position (the seat lifter mechanism is in a neutral state, when the operation lever 5 is in the neutral position) and released to the neutral position repeatedly, the height position of the seat cushion 3 is raised little by little. Conversely, as the operation lever 5 is lowered from the neutral position and released to the neutral position repeatedly, the height position of the seat cushion 3 is lowered little by little. In this way, the seat lifter mechanism serves a height position adjusting function for the seat base of the seat 1.

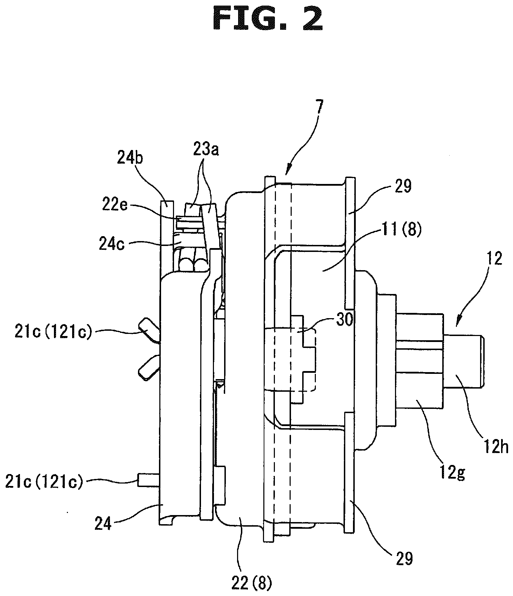

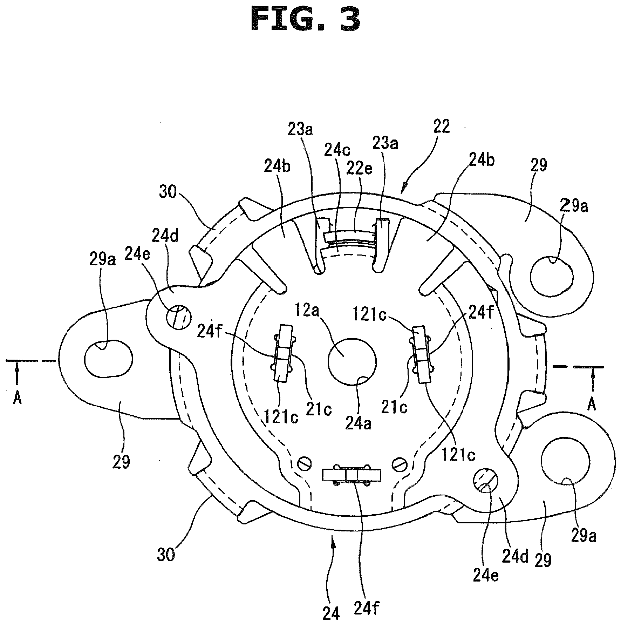

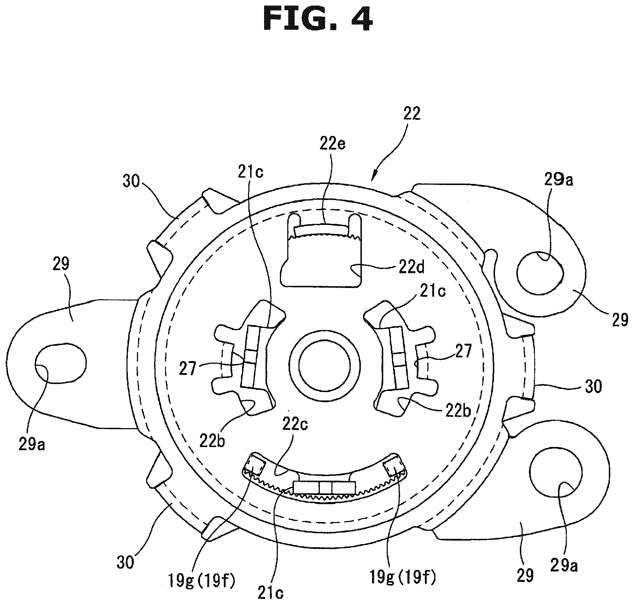

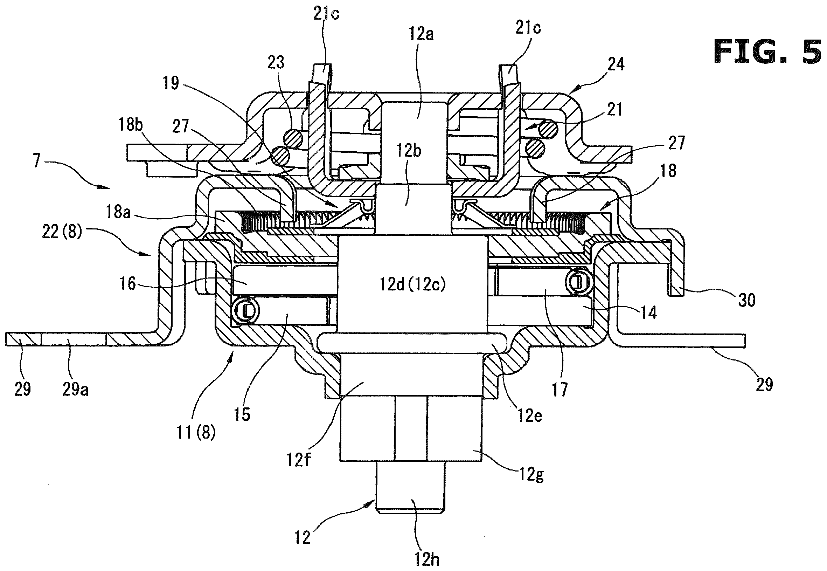

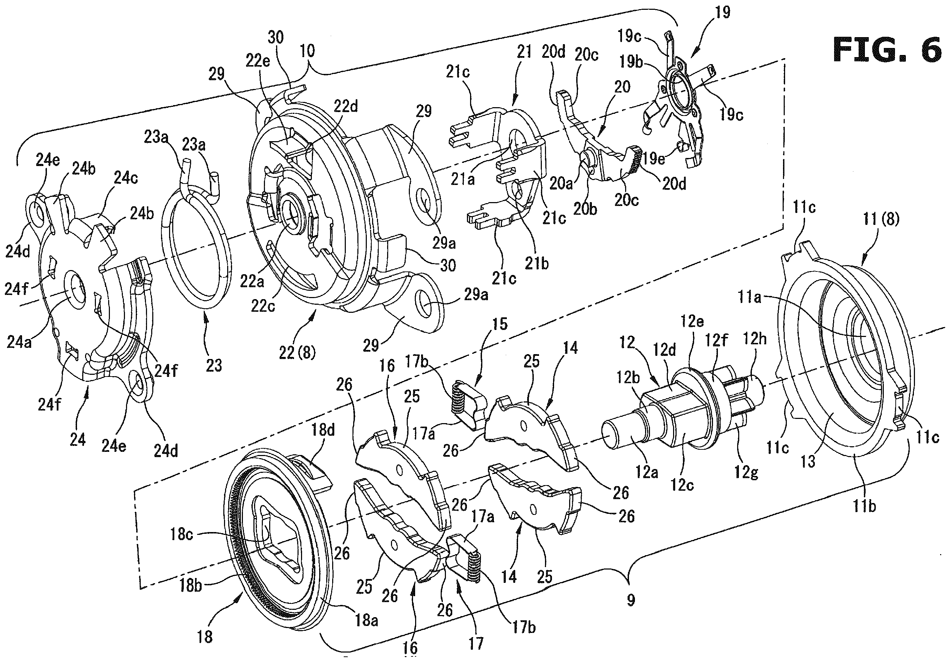

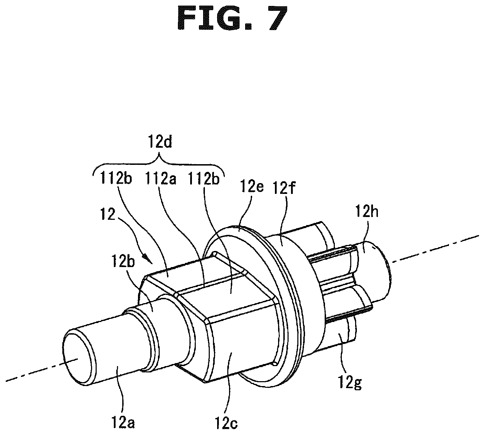

FIG. 2 shows a front view of a brake device 7 employed by the seat lifter mechanism of the seat 1 as viewed from a front side of a motor vehicle when the seat 1 is mounted in the motor vehicle. FIG. 3 shows a left side view of the brake device 7 shown in FIG. 2. FIG. 4 shows a left side view of the brake device 7 shown in FIG. 3 as a lever bracket 24 is removed from the brake device 7. FIG. 5 shows a sectional view of the brake device 7 taken along a plane indicated by a line A-A in FIG. 3. FIG. 6 shows an exploded perspective view of the brake device 7 shown in FIG. 2. FIG. 7 shows an enlarged perspective view of a pinion shaft 12 shown in FIG. 6.

As shown in FIGS. 2 and 6, the brake device 7 is composed of a braking section 9 and an operating section 10. The brake device 7 includes a case 8 having a substantially cylindrical shape. The case 8 is composed of half-split housing members, namely, a housing 11 and a cover 22, which are abutted and coupled to each other. In the case 8, components of the braking section 9 and components of the operating section 10 are mounted and arranged coaxially as shown in FIG. 6. In a central position of the case 8, the pinion shaft 12 is supported to extend in an axial direction inside the housing 11 of the braking section 9 and also inside the cover 22 of the operating section 10. The pinion shaft 12 includes a first end rotatably supported by the lever bracket 24, and a second end formed integrally with a pinion gear 12g exposed externally to the outside. The lever bracket 24 and the operation lever 5 shown in FIG. 1 constitute an operation member.

The lever bracket 24 is structured to be rotated in a normal rotational direction or in a reverse rotational direction from its neutral position. The operation lever 5 shown in FIG. 1 is fixed to the lever bracket 24 by screwing with screw holes 24e (see FIG. 3) of the lever bracket 24.

The brake device 7 is mounted to a side bracket not shown of the seat 1 shown in FIG. 1 by mounting holes 29a of flanges 29 of the cover 22 such that the pinion gear 12g meshes with a driven gear not shown of the seat lifter mechanism.

When the lever bracket 24 is in the neutral position, the brake device 7 holds a braked state to prevent the pinion shaft 12 from being rotated by a torque inversely inputted through the pinion shaft 12. On the other hand, when the lever bracket 24 is rotated in the normal rotational direction or in the reverse rotational direction from the neutral position, the brake device 7 releases the pinion shaft 12 from the braked state, and allows the pinion shaft 12 to be rotated by rotating operation of the lever bracket 24. Rotation of the pinion shaft 12 is converted into a rotational displacement of the driven gear of the seat lifter mechanism through the pinion gear 12g, and further into a vertical displacement of the seat cushion 3 of the seat 1 via a link mechanism.

In general, the lever bracket 24 has a relatively short stroke. Accordingly, in many situations, in order to obtain a desired movement of the seat cushion 3, a process of rotating operation of the lever bracket 24 in a specific rotational direction and release of the lever bracket 24 is repeated.

As shown in FIGS. 2 and 6, in the case 8, which is composed of the housing 11 of the braking section 9 and the cover 22 of the operating section 10, some components of the braking section 9 and the operating section 10 are arranged coaxially and adjacent to each other. The following describes a three-dimensional shape and arrangement of each component with reference to FIG. 6 and others.

As shown in FIG. 6, the braking section 9 includes the housing 11, the pinion shaft 12, a pair of lock plates 14, a lock spring 15, a pair of lock plates 16, a lock spring 17, and a drive wheel 18. The housing 11 is a part of the case 8 as described above. The pinion shaft 12 is rotatably supported by the housing 11. Each lock plate 14 is mounted in the housing 11, and arranged opposite to each other, and has a substantially semicircular shape. The lock spring 15 is shared by the lock plates 14. The pair of lock plates 16 are placed over the lock plates 14 in the axial direction, and identical in shape to the lock plates 14. The lock spring 17 is shared by the lock plates 16. The drive wheel 18 is placed over the lock plates 16, and has a pan-like shape.

On the other hand, as shown in FIG. 6, the operating section 10 includes a holder plate 19, a tooth plate 20, an input lever 21, a cover 22, a coil spring 23, and the lever bracket 24. The holder plate 19 is placed over the drive wheel 18. The tooth plate 20 is combined with the holder plate 19. The input lever 21 is placed over the holder plate 19 and the tooth plate 20 in the axial direction. The cover 22 is abutted and coupled to the housing 11 to form the case 8 as described above. The coil spring 23 is a torsion coil spring arranged outside the cover 22. The lever bracket 24 is placed also outside of the cover 22, forming the operation member.

The housing 11 of the braking section 9 is made of a plate metal material having a specific thickness, and formed by drawing press into a pot-like shape, having a cylindrical inner peripheral surface serving as a braking surface 13.

The housing 11 includes a bottom part including a shaft hole 11a in which a larger-diameter shaft part 12f of the pinion shaft 12 adjacent to the pinion gear 12g is inserted. The housing 11 includes an opening edge part including a flange 11b. The flange 11b includes three engagement recesses 11c in this example. The three engagement recesses 11c are employed for coupling with the cover 22 as detailed below.

As shown in FIG. 6, the pinion shaft 12 has a multiple-stepped shape, including a smaller-diameter shaft part 12a, an intermediate-diameter shaft part 12b, a rectangular shaft part 12c, a flange 12e, the larger-diameter shaft part 12f, the pinion gear 12g, and a tip shaft part 12h, which are arranged coaxially and integrally formed. The rectangular shaft part 12c has a variant shape including a generally flat portion having acting surfaces 12d. As shown in FIG. 5, the flange 12e is structured to abut an inner bottom surface of the housing 11, and thereby restrict movement of the pinion shaft 12 in the axial direction. The larger-diameter shaft part 12f is rotatably supported by the shaft hole 11a of the housing 11. The pinion gear 12g serves as a driving gear. The tip shaft part 12h is on the tip s ide of the pinion gear 12g.

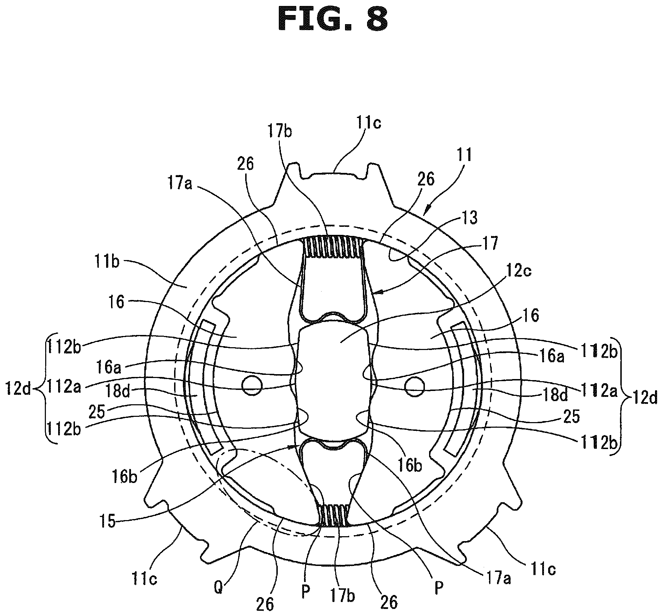

As detailed below with reference to FIG. 8, the acting surfaces 12d of the rectangular shaft part 12c of the pinion shaft 12 serve as a part to be restricted by the lock plates 14, 16 when in the braked state, and inversely apply forces to the lock plates 14 and the lock plates 16 radially outwardly when an external torque is inversely inputted to the pinion shaft 12.

As shown in FIG. 7, each acting surface 12d of the rectangular shaft part 12c of the pinion shaft 12 is not a simply flat surface, but is composed of a crest line 112a and inclined surfaces 112b extending from the crest line 112a. Specifically, the crest line 112a corresponds in position to the center (or axis) of the pinion shaft 12 or the rectangular shaft part 12c, and extends in the axial direction of the pinion shaft 12, whereas each inclined surface 112b gradually descends from the crest line 112a toward a radially outward end. In other words, as viewed in the axial direction, the rectangular shaft part 12c of the pinion shaft 12 is tapered to its first and the second ends.

As shown in FIG. 6, the lock plates 14 are structured to be in sliding contact with the inner bottom surface of the housing 11, and arranged opposite to each other, i.e. symmetric with respect to a line such as a vertical line or horizontal line. The lock plates 16 are placed over the lock plates 14 in the axial direction. Similar to the lock plates 14, the lock plates 16 are arranged opposite to each other, i.e. symmetric with respect to a line such as a vertical line or horizontal line. Each lock plate 14, 16 includes first and second ends between which a recess 25 is formed in its outer peripheral surface, wherein each of the first and second ends includes a braking and locking surface 26 that has a circular arc shape, and is structured to be in contact with the braking surface 13 of the housing 11.

The lock spring 15 is interposed in compressed state between the first end of the first lock plate 14 and the first end of the second lock plate 14, to bias the first end of each lock plate 14 away from each other. Similarly, the lock spring 17 is interposed in compressed state between the second end of the first lock plate 16 and the second end of the second lock plate 16, to bias the second end of each lock plate 16 away from each other. Each lock spring 15, 17 is a combined spring, including a leaf spring 17a and a coil spring 17b, wherein the leaf spring 17a is bended in an M-shape, and the coil spring 17b is interposed between ends of leg portions of the leaf spring 17a, to bias each leg portion of the leaf spring 17a away from each other.

As shown in FIG. 6, the drive wheel 18 is of an internal tooth type, including a ring part 18a at its outer periphery, and internal teeth 18b extending entirely in an inner periphery of the ring part 18a. The drive wheel 18 includes a rectangular hole 18c at its central position, wherein the rectangular shaft part 12c of the pinion shaft 12 is fitted in the rectangular hole 18c to allow the drive wheel 18 to rotate together with the rectangular shaft part 12c of the pinion shaft 12. The drive wheel 18 includes a pair of release nails 18d at its back side, wherein each release nail 18d projects toward the lock plates 14, 16, and has a circular arc shape as viewed in the axial direction (see FIG. 8).

The fitting between the rectangular hole 18c of the drive wheel 18 and the rectangular shaft part 12c of the pinion shaft 12 is provided with a preset play in the rotational direction. The drive wheel 18 is produced by forming the ring part 18a along with the internal teeth 18b by half blanking by stamping a circular metal plate (see FIG. 5), and then forming the release nails 18d and a bottom part inside the ring part 18a of a resin material by insert molding or the like.

As shown in FIGS. 6 and 5, the larger-diameter shaft part 12f of the pinion shaft 12 is inserted in and rotatably supported by the shaft hole 11a of the housing 11, wherein the larger-diameter shaft part 12f is formed at a root portion of the pinion gear 12g. On the other hand, the acting surfaces 12d of the rectangular shaft part 12c are inserted in an intermediate space between the lock plates 14 and an intermediate space between the lock plates 16. The rectangular shaft part 12c is loosely fitted in the rectangular hole 18c of the drive wheel 18 such that the rectangular shaft part 12c can rotate by a small angle with respect to the rectangular hole 18c.

As shown also in FIG. 8, each of the release nails 18d of the drive wheel 18 is placed radially outside the corresponding lock plate 14 and the corresponding lock plate 16, and fitted in the recess 25 of the corresponding lock plate 14 and the recess 25 of the corresponding lock plate 16 with a clearance in the rotational direction. Each release nail 18d has an arc-shaped outer peripheral surface in pressing contact with the braking surface 13 of the housing 11 by an elastic force of the release nail 18d itself.

Specifically, as shown in FIG. 8, which shows the braking section 9 in the neutral state, each of the lock plates 16 sandwiching the rectangular shaft part 12c of the pinion shaft 12 has an end surface P that faces the acting surface 12d of the rectangular shaft part 12c, and includes protrusions 16a, 16b each having a circular arc shape. The protrusion 16a is located at the second end side of the lock plate 16, whereas the protrusion 16b is located at the first end side of the lock plate 16. The lock spring 17, which is disposed in compressed state between the second end of the first lock plate 16 and the second end of the second lock plate 16, biases them away from each other.

This causes each lock plate 16 to rotate along the braking surface 13 of the housing 11 by a preset amount such that the clearance between the first ends of the lock plates 16 is smaller than the clearance between the second ends of the lock plates 16. Accordingly, the protrusion 16b of each lock plate 16 is in contact with a corresponding portion of the acting surface 12d of the rectangular shaft part 12c, whereas the protrusion 16a is out of contact with the acting surface 12d of the rectangular shaft part 12c.

The foregoing positional relationship is true for the lock plates 14, except for the position of the lock spring. Namely, the lock spring 15, which is disposed between the first ends of the lock plates 14, biases the first ends of the lock plates 14 away from each other. Accordingly, the acting surfaces 12d of the rectangular shaft part 12c are in contact with the lock plates 14, 16 with no play in the rotational direction.

In FIG. 8 and the following, the orientation of the braking section 9 and the orientation of the operating section 10 are set different by 90 degrees from the positions shown in FIG. 6.

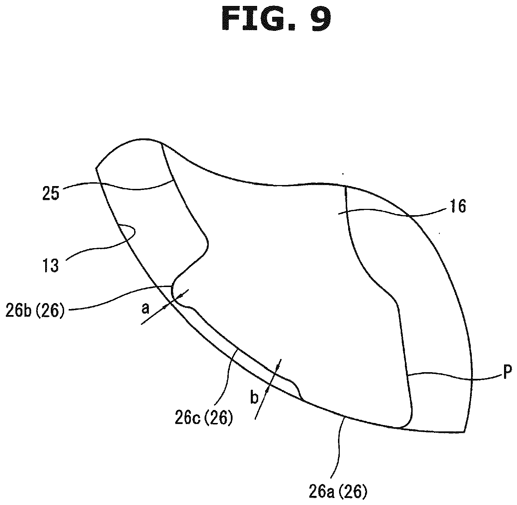

FIG. 9 shows an enlarged view of a region indicated by Q in FIG. 8. As shown in FIG. 9, the braking and locking surface 26 of the outer peripheral surface of each lock plate 16 includes a larger-diameter braking surface 26a, a braking protrusion 26b, and a recess 26c. The larger-diameter braking surface 26a has a diameter that becomes slightly shorter as being closer to the surface P, and is in contact with the braking surface 13 of the housing 11 by a longer distance in the circumferential direction. The braking protrusion 26b has a small circular arc shape, and is adjacent to the recess 25. The recess 26c separates the larger-diameter braking surface 26a and the braking protrusion 26b from each other. The braking and locking surface 26 of each lock plate 14 is the same as the braking and locking surface 26 of the lock plate 16.

As shown in FIG. 9, under a normal condition where the larger-diameter braking surface 26a of each lock plate 16 is in contact with the braking surface 13 of the housing 11, each lock plate 16 satisfies a mathematical expression of a < b, wherein a represents a clearance between the braking protrusion 26b and the braking surface 13, and b represents a depth of the recess 26c with res pect to the braking surface 13, wherein the braking protrusion 26b is out of contact with the braking surface 13.

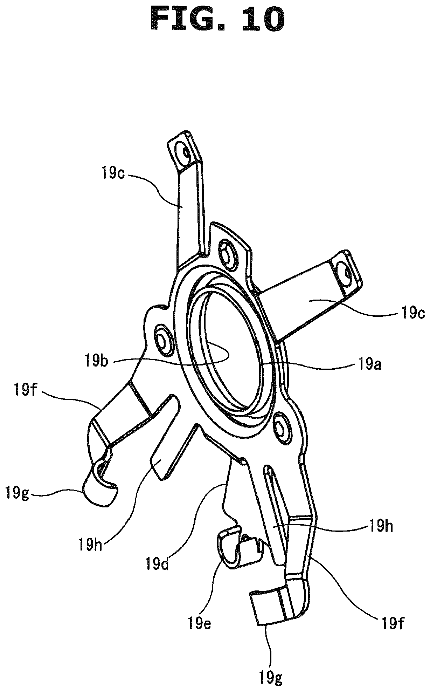

As shown in FIGS. 6 and 10, the holder plate 19 of the operating section 10 has a kind of leaf spring serving as a spring in the axial direction of the pinion shaft 12. The holder plate 19 includes a boss 19a, a pair of legs 19c, and an arm 19d. The boss 19a includes a shaft hole 19b in which the intermediate-diameter shaft part 12b of the pinion shaft 12 is inserted. Each leg 19c extends radially outwardly from the boss 19a, and is formed integrally with the boss 19a by bending toward the drive wheel 18 and seated on the bottom part of the drive wheel 18. The arm 19d also extends radially outwardly from the boss 19a, and is formed integrally with the boss 19a by bending to have a stepped shape. The arm 19d includes a first shaft part 19e that is formed by cutting and raising a tip portion of the arm 19d to have a substantially cylindrical shape. The first shaft part 19e serves as a first support part.

As shown in FIGS. 6 and 10, the holder plate 19 further includes a pair of acting parts 19f closer to the arm 19d, wherein each acting part 19f is formed by bending toward the cover 22, and extends radially outwardly from the boss 19a without interference with the arm 19d. Each acting part 19f includes an engaging portion 19g that is formed by curving the tip portion of the acting part 19f. The holder plate 19 further includes a pair of holding parts 19h inside the pair of acting parts 19f, wherein each holding part 19h extends straight radially from the boss 19a, wherein the arm 19d is interposed between the pair of holding parts 19h as viewed in the axial direction.

As shown in FIG. 6, the tooth plate 20 has a substantially semicircular shape, and is placed over the arm 19d of the holder plate 19 in the recess of the drive wheel 18. The tooth plate 20 includes a shaft part 20a at its central position, wherein the shaft part 20a has a variant shape and projects toward the cover 22. The tooth plate 20 further includes a shaft hole 20b that has a circular shape, and is offset from the shaft part 20a outwardly in the radial direction of the pinion shaft 12. The tooth plate 20 includes a pair of rims 20c at its ends, wherein each rim 20c faces the internal teeth 18b of the drive wheel 18. Each rim 20c includes external teeth 20d in its outer peripheral surface, wherein the external teeth 20d engage with the internal teeth 18b of the drive wheel 18.

The external teeth 20d has a substantially D-shape that is formed by cutout of a part from a circular shape, in this example. This serves to avoid interference with the adjacent shaft hole 20b. Accordingly, the shaft part 20a may be formed to have a substantially cylindrical shape, if there is no such interference.

As shown in FIG. 6, the input lever 21 is an input member of the operating section 10, including a shaft hole 21a at its central portion through which the input lever 21 is rotatably supported by the intermediate-diameter shaft part 12b of the pinion shaft 12. The input lever 21 includes a smaller-diameter shaft hole 21b that is offset outwardly from the shaft hole 21a, and serves as a second support part in which the shaft part 20a of the tooth plate 20 is inserted. The input lever 21 includes three bended engagement parts 21c at its outer periphery, wherein each bended engagement part 21c projects toward the cover 22 and has a pair of branched end portions.

The shaft part 20a of the tooth plate 20 is rotatably inserted and supported in the smaller-diameter shaft hole 21b of the input lever 21. In this way, the input lever 21 and the tooth plate 20 are rotatably coupled to each other. The shaft hole 20b of the tooth plate 20 is engaged with the first shaft part 19e of the holder plate 19 such that the tooth plate 20 and the holder plate 19 are rotatably coupled to each other. The tooth plate 20 is inserted between the arm 19d and the holding parts 19h of the holder plate 19. The combination of the shaft hole 20b of the tooth plate 20 and the first shaft part 19e of the holder plate 19 may be replaced with a combination of a shaft part of the tooth plate 20 and a shaft hole of the holder plate 19.

As shown in FIG. 6, the cover 22 is integrally formed by deep drawing by stamping to have a cup-shape. As shown in FIGS. 2 and 5, the cover 22 is coupled with the housing 11 of the braking section 9 such that the cover 22 and the housing 11 form the case 8 of the brake device 7. As described above, the components of the braking section 9 and the operating section 10 are mounted in the case 8.

As shown in FIG. 5, the holder plate 19 is elastically compressed between the drive wheel 18 and the input lever 21 to bring the holder plate 19 into pressing contact with the drive wheel 18 and the input lever 21. Furthermore, the end portions of the legs 19c of the holder plate 19 are put in pressing contact with a resin-molded portion of the bottom wall of the drive wheel 18, thereby producing a resistance in the rotational direction against slide between the holder plate 19 and the drive wheel 18.

As shown in FIG. 4, the cover 22 includes a wall part that includes a shaft hole 22a in its central portion, and a pair of slots 22b opposite to each other with respect to the shaft hole 22a, wherein each slot 22b has a circular arc shape. In a direction perpendicular to the direction of arrangement of the slots 22b, an opening 22c and an opening 22d are arranged opposite to each other with respect to the shaft hole 22a. The opening 22c is a slot having a circular arc shape. The opening 22d has a rectangular shape, and is formed with a cut and raised part 22e radially outside of the opening 22d, wherein the cut and raised part 22e stands perpendicularly outwardly. The opening 22c has a greater length along its arc shape than the slots 22b. When the cover 22 is coupled with the housing 11 of the braking section 9, the shaft hole 22a of the cover 22 is fitted with the smaller-diameter shaft part 12a of the pinion shaft 12 such that the pinion shaft 12 is rotatably supported at two end points by the housing 11 and the cover 22.

As shown in FIG. 4, the three bended engagement parts 21c of the input lever 21 are inserted through corresponding ones of the two slots 22b and the opening 22c, projecting toward the lever bracket 24. The length of each slot 22b and the length of the opening 22c in the circumferential direction are set greater sufficiently than the width of each bended engagement part 21c. The range of rotation of the input lever 21 rotatable in the normal rotational direction and in the reverse rotational direction is restricted by the length of each slot 22b. Accordingly, the range of rotation of the lever bracket 24, which is coupled to the input lever 21, is also restricted by the length of each slot 22b. Namely, the inner peripheral surface of each longitudinal end of each slot 22b serves as a stopper to restrict the range of rotation of the lever bracket 24.

As shown in FIG. 4, as the input lever 21 is in its neutral position, the engaging portion 19g of each acting part 19f of the holder plate 19 is engaged detachably with the corresponding longitudinal end of the opening 22c of the cover 22. Accordingly, the holder plate 19 is made to rotate together with the input lever 21 via the tooth plate 20, and when the input lever 21 is returned to the neutral position, the holder plate 19 is also returned to the neutral position.

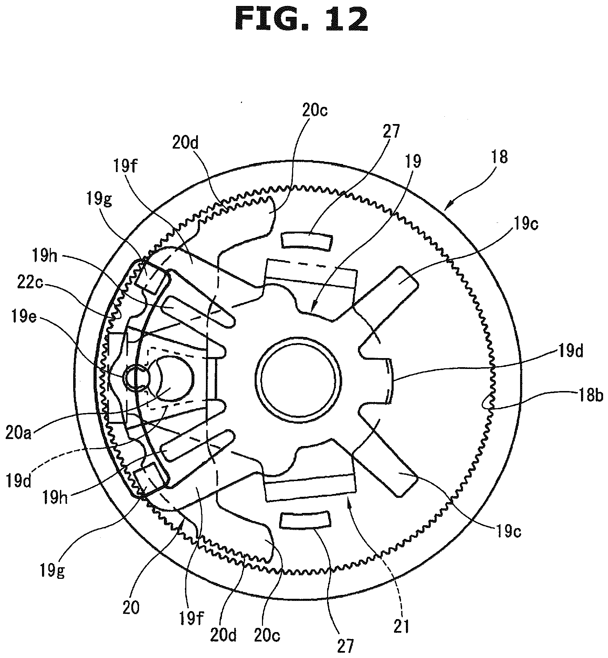

As shown in FIG. 4, each slot 22b is provided with a guide protrusion 27 at its peripheral part, which is formed by bending to project inwardly. As shown in FIGS. 5 and 12, each guide protrusion 27 faces the internal space of the braking section 9, and serves to guide movement of the tooth plate 20 as detailed below.

As shown in FIGS. 4 and 6, the cover 22 includes three flanges 29 at its outer periphery, wherein the flanges 29 are formed by bending radially outwardly to face the housing 11, and arranged in the circumferential direction, wherein each flange 29 includes a mounting hole 29a. The cover 22 further includes three flange engagement projections 30 without interference with the flanges 29, wherein each flange engagement projection 30 projects less than the flanges 29. As shown in FIG. 2, each flange engagement projection 30 is fitted in the corresponding engagement recess 11c of the housing 11, when the cover 22 is coupled with the housing 11 to form the case 8. Furthermore, each flange engagement projection 30 is swaged from a state indicated by an imaginary line in FIG. 2 to a state indicated by a solid line in FIG. 2, to fix the cover 22 and the housing 11 together while preventing the cover 22 and the housing 11 from being detached from each other. The flanges 29 of the cover 22 are employed to mount the brake device 7 to the seat 1 shown in FIG. 1.

As shown in FIGS. 6 and 5, the lever bracket 24 is formed by drawing press to have a pan-like shape, and is arranged outside the side wall part of the cover 22. Between the cover 22 and the lever bracket 24, the coil spring 23 is disposed in a recess of the lever bracket 24. The lever bracket 24 includes a shaft hole 24a at its central portion. The lever bracket 24 is rotatably supported by the pinion shaft 12 by insertion of the smaller-diameter shaft part 12a of the pinion shaft 12 in the shaft hole 24a of the lever bracket 24. As shown in FIG. 3, the lever bracket 24 has a pair of positioning parts 24b and a cut and raised part 24c at its outer periphery, wherein the cut and raised part 24c is disposed between the positioning parts 24b, and projects toward the cover 22.

As shown in FIGS. 6 and 3, the lever bracket 24 includes a pair of flanges 24d and three rectangular holes 24f, wherein each flange 24d includes a screw hole 24e, and wherein each rectangular hole 24f corresponds to one of the three bended engagement parts 21c of the input lever 21. Each bended engagement part 21c of the input lever 21 extends through a corresponding one of the slots 22b and the opening 22c of the cover 22, and engages with and projects through the corresponding rectangular hole 24f of the lever bracket 24.

As shown in FIG. 3, a pair of tip branched portions 121c of each bended engagement part 21c of the input lever 21 projecting through the rectangular hole 24f of the lever bracket 24 are bended away from each other to fix the lever bracket 24 and the input lever 21 to each other while the cover 22 is disposed therebetween. This prevents relative rotation between the lever bracket 24 and the input lever 21, and allows the lever bracket 24 and the input lever 21 to rotate as a solid unit in the normal rotational direction or in the reverse rotational direction.

The cut and raised part 24c of the lever bracket 24 corresponds in position to the cut and raised part 22e of the cover 22. Accordingly, as shown in FIGS. 3 and 4, when the lever bracket 24 is fixed to the input lever 21, the cut and raised part 24c of the lever bracket 24 is inserted in the opening 22d of the cover 22, so that the cut and raised part 22e overlaps with the cut and raised part 24c.

The operation lever 5 shown in FIG. 1 is attached to the lever bracket 24 shown in FIGS. 3 and 6. The operation lever 5 is positioned with respect to the lever bracket 24 by the pair of positioning parts 24b, and is then fixed to the lever bracket 24 by putting fastening screws not shown into the two screw holes 24e. By this configuration, the operation lever 5 and the lever bracket 24 serve as an operation member in the operating section 10.

As shown in FIG. 6, the coil spring 23 is mounted between the cover 22 and the lever bracket 24, to bias the input lever 21 and the lever bracket 24 toward the neutral position and hold them in the neutral position. The coil spring 23 includes hook portions 23a at its ends, wherein each hook portion 23a is formed by bending radially outwardly. As shown also in FIG. 3, the coil spring 23 is set in tightened state, and the pair of hook portions 23a are made to sandwich and engage with the cut and raised part 22e of the cover 22 and the cut and raised part 24c of the lever bracket 24 that overlap with each other, in the rotational direction.

Accordingly, when the operation lever 5 shown in FIG. 1 is rotated in the normal rotational direction or in the reverse rotational direction, and then an effort of operating the operation lever 5 is released, the biasing force of the coil spring 23 causes the input lever 21 and the lever bracket 24 and the operation lever 5 to return to the neutral position.

The pinion shaft 12, the lock plates 14, 16, and the ring part 18a of the drive wheel 18, the tooth plate 20, etc. are made of metal. These components are hardened by quenching before assembling, in consideration of requirements of each component. On the other hand, the housing 11 is also made of metal, but preferably, is made to undergo no quenching process. This serves to allow the larger-diameter braking surface 26a and the braking protrusion 26b of each lock plate 14, 16 to suitably bite the braking surface 13 of the housing 11, while ensuring a resistance against slide between each lock plate 14, 16 and the braking surface 13, as detailed below.

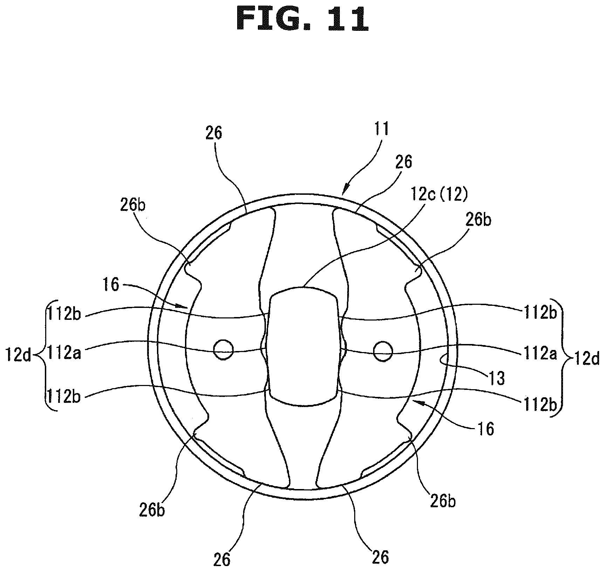

The brake device 7 described above operates and produces advantageous effects as follows. When the operation lever 5 and also the lever bracket 24 are free from rotating operation, the lever bracket 24 and the input lever 21 are maintained in the neutral state by the biasing force of the coil spring 23. FIG. 11 schematically shows the braking section 9 shown in FIG. 8 in the neutral state. FIG. 12 shows the operating section 10 shown in FIG. 6 in the neutral state.

When in the neutral state shown in FIGS. 11 and 12, the tooth plate 20 of the operating section 10 is in the neutral position, and the external teeth 20d of each end of the tooth plate 20 are out of meshing contact with the internal teeth 18b of the drive wheel 18 with a clearance. Simultaneously, in the braking section 9, the protrusions 16a, 16b of the lock plates 14, 16 are pressed on the acting surfaces 12d of the rectangular shaft part 12c of the pinion shaft 12 under the biasing forces of the lock springs 15, 17, and the braking and locking surface 26 of each end of each lock plate 14, 16 is pressed on the braking surface 13 of the housing 11. This prevents rotation of the pinion shaft 12 in the normal rotational direction and in the reverse rotational direction, and frictionally holds the brake device 7 in the braked state.

In this way, the lock plates 16 and the lock spring 17 serve as a first braking component to serve a braking function along with the braking surface 13 of the housing 11. Similarly, the lock plates 14 and the lock spring 15 serve as a second braking component to serve a braking function along with the braking surface 13 of the housing 11.

Under this condition, the brake device 7 is self-held in the braked state by the frictional force between the braking surface 13 of the housing 11 and the braking and locking surface 26 of each lock plate 14, 16, even when an inverse input acts on the brake device 7 from the seat lifter mechanism due to seating of a passenger. This behavior is detailed below.

When an excessive external force is inputted inversely through the pinion shaft 12, this force is resisted by the frictional force of the larger-diameter braking surface 26a of the braking and locking surface 26, and also by biting of the braking protrusion 26b of the braking and locking surface 26 into the braking surface 13. In this way, in the braking section 9, the braking surface 13 of the housing 11, and the lock plates 14, 16 with the lock springs 15, 17 serve a direct braking function.

For adjustment of the height position by the seat lifter mechanism, the braking section 9 of the brake device 7 is released from the braked state by rotating operation of the lever bracket 24 of the operating section 10 with the operation lever 5 in the normal rotational direction or in the reverse rotational direction.

In the state shown in FIG. 12, the external teeth 20d of each end of the tooth plate 20 face the internal teeth 18b of the drive wheel 18, but are out of meshing-contact with the internal teeth 18b with a clearance. Each rim 20c of the tooth plate 20, in which the external teeth 20d are formed, is out of contact with the guide protrusion 27 projecting from the cover 22.

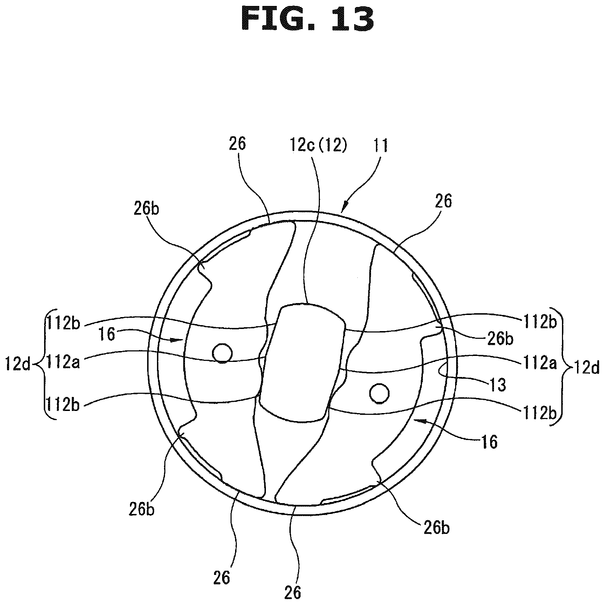

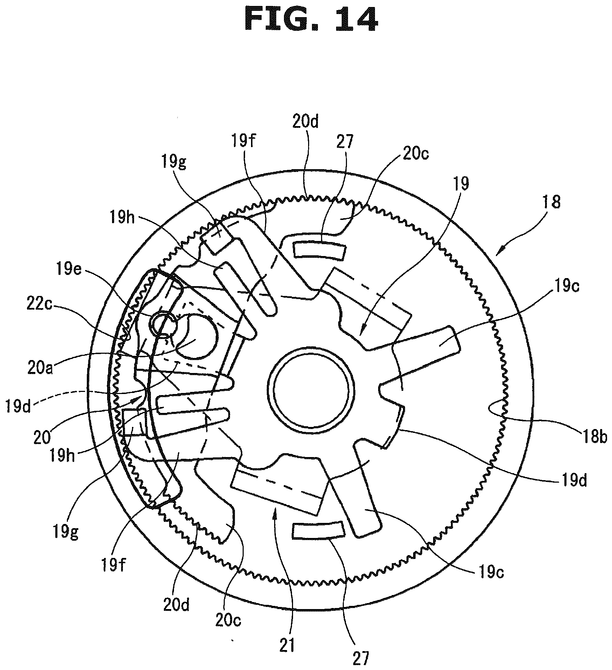

The following deals with a situation that the operation lever 5 and the lever bracket 24 are rotated in the normal rotational direction or in the reverse rotational direction from the neutral state of the operating section 10 shown in FIG. 12. FIGS. 13 and 14 respectively show the braking section 9 and the operating section 10 when the operation lever 5 and also the lever bracket 24 are rotated in the clockwise direction from the neutral state shown in FIGS. 11 and 12. As shown in FIG. 14, as the lever bracket 24 rotates in the clockwise direction, the input lever 21 of the operating section 10 rotates in the same direction integrally with the lever bracket 24. Furthermore, this rotation of the input lever 21 pushes the tooth plate 20 in the clockwise direction because of the fitting between the shaft part 20a of the tooth plate 20 and the smaller-diameter shaft hole 21b of the input lever 21.

The tooth plate 20 is supported at the shaft hole 20b by the first shaft part 19e of the holder plate 19, whereas the holder plate 19 is pressed on the inner bottom surface of the drive wheel 18, and is thereby subject to a rotational resistance against the clockwise rotation of the drive wheel 18. Accordingly, when the shaft part 20a of the tooth plate 20 is pushed by the input lever 21, the tooth plate 20 rotates about the first shaft part 19e of the holder plate 19 in the counterclockwise direction in FIG. 14. As a result, as shown in FIG. 14, the external teeth 20d of the upper one of the rims 20c of the tooth plate 20 are brought into meshing contact with the internal teeth 18b of the drive wheel 18. As the input lever 21 is thereafter rotated more in the clockwise direction in FIG. 14, the input lever 21, the tooth plate 20, the holder plate 19, and the drive wheel 18 rotate as a solid unit.

As shown in FIG. 14, when in the state that the input lever 21 is rotated from the neutral position, the upper rim 20c of the tooth plate 20 is positioned to face the upper one of the guide protrusions 27 of the cover 22. This causes interference between the upper rim 20c of the tooth plate 20 and the upper guide protrusion 27, and thereby prevents the lower external teeth 20d of the tooth plate 20 from meshing with the internal teeth 18b of the drive wheel 18. Accordingly, when the input lever 21 returns from the position shown in FIG. 14 to the neutral position, the in put lever 21, the tooth plate 20, and the holder plate 19 rotate as a solid unit to the neutral state, with the lower external teeth 20d being out of meshing contact with the internal teeth 18b of the drive wheel 18.

As shown in FIG. 4, two of the three bended engagement parts 21c of the input lever 21, which rotate along with the operation lever 5, are inserted through the corresponding slots 22b of the cover 22. Accordingly, the stroke of the operation lever 5 is restricted by contact between each bended engagement part 21c and one of the longitudinal ends of the corresponding slot 22b.

As shown in FIG. 14, the drive wheel 18 is pushed by meshing contact with the tooth plate 20, and thereby releases the restriction of rotation of the pinion shaft 12 by the lock plates 14, 16. As shown in FIG. 8, each release nail 18d of the drive wheel 18 is inserted in the recess 25 of the corresponding lock plates 14, 16. The release nails 18d are shown in FIG. 8, but are omitted in FIGS. 11 and 13.

As the drive wheel 18 rotates in the clockwise direction as shown in FIG. 14, each release nail 18d of the drive wheel 18 rotates the corresponding lock plates 14, 16 in the clockwise direction. As shown in FIG. 13, the sandwiching of the acting surface 12d of the pinion shaft 12 by the lock plates 14, 16 is released, to substantially release the braking section 9 from the braked state. This allows the pinion shaft 12 to rotate with respect to the lock plates 14, 16 and also with respect to the housing 11.

As the drive wheel 18 is pushed by the tooth plate 20 to rotate, the pinion shaft 12 starts to rotate after the drive wheel 18 has rotated by the preset play between the rectangular hole 18c of the drive wheel 18 and the acting surfaces 12d of the rectangular shaft part 12c of the pinion shaft 12. The contact between the rectangular hole 18c and the acting surfaces 12d of the rectangular shaft part 12c allows the pinion shaft 12 to rotate in the clockwise direction in FIG. 13. This rotation of the pinion shaft 12 causes rotation of the pinion gear 12g naturally, and thereby causes rotation of the driven gear of the seat lifter mechanism that meshes with the pinion gear 12g, and thereby causes a downward displacement of the seat 1 in this example.

With respect to the amount of rotation of the operation lever 5, the vertical displacement of the seat 1 by the seat lifter mechanism is small. Accordingly, in many situations, a desired vertical displacement of the seat 1 is achieved by a plurality of operations of the operation lever 5.

The operation lever 5 shown in FIG. 1, which is attached to the lever bracket 24 shown in FIG. 6, receives a restoring force of the coil spring 23 shown in FIG. 6 via the lever bracket 24. Accordingly, when the force of operation of the operation lever 5 is released, the restoring force of the coil spring 23 causes the operation lever 5, and the input lever 21, the holder plate 19, and the tooth plate 20 of the operating section 10 to return from the state shown in FIG. 14 to the neutral state shown in FIG. 12.

For the return to the neutral state, as the input lever 21 is rotated in the counterclockwise direction from the state shown in FIG. 14 toward the neutral position, the tooth plate 20 rotates in the clockwise direction about the first shaft part 19e of the holder plate 19. This rotation of the tooth plate 20 brings the upper external teeth 20d out of meshing contact with the internal teeth 18b of the drive wheel 18, whereas allowing the lower external teeth 20d to move toward meshing contact with the internal teeth 18b.

However, the upper guide protrusion 27 of the cover 22 prevents the upper rim 20c of the tooth plate 20 from rotating further from the neutral position. This thereby prevents the lower external teeth 20d of the tooth plate 20 from meshing with the internal teeth 18b of the drive wheel 18. Accordingly, while the drive wheel 18 remains in the position to which the drive wheel 18 has been rotated previously, the input lever 21, the tooth plate 20, and the holder plate 19 rotate and return to the neutral position shown in FIG. 12 without rotation of the drive wheel 18 and the pinion shaft 12. As the tooth plate 20 returns to the neutral position as shown in FIG. 12, the upper rim 20c of the tooth plate 20 is released from restriction of the corresponding guide protrusion 27 of the cover 22 such that both of the upper external teeth 20d and the lower external teeth 20d are brought into the positions capable of meshing with the internal teeth 18b of the drive wheel 18.

As is clear from comparison between FIG. 12 and FIG.14, when the holder plate 19 is rotated in the clockwise direction as shown in FIG. 14, the holding part 19h at the tip of the acting part 19f gets out of the opening 22c of the cover 22 temporarily. On the other hand, when the holder plate 19 is returned to the neutral position as shown in FIG. 12, the holding part 19h at the tip of the acting part 19f also returns to the initial state and engages again with the opening 22c of the cover 22.

As is clear from FIGS. 11 and 12, each of the braking section 9 and the operating section 10 has an internal structure symmetric with respect to a line such as a vertical line or horizontal line. Accordingly, the behavior of the brake device 7 described above is true for the situation where the operation lever 5 is rotated in the opposite direction (in the counterclockwise direction in FIGS. 11 and 12), except for the direction of rotation of the components of the operating section 10 and the braking section 9.

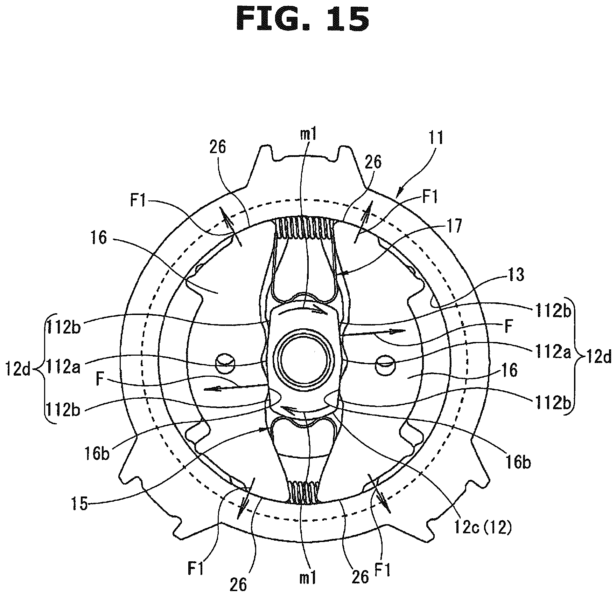

FIG. 15 shows the braking section 9 in the braked state when an external torque is inversely inputted to the pinion shaft 12, where the left side of FIG. 15 shows a relationship among forces in the first braking component including the lock plates 16, and the right side of FIG. 15 shows a relationship among forces in the second braking component including the lock plates 14, with the release nails 18d shown in FIG. 8 omitted.

In the state shown in FIG. 15, as the pinion shaft 12 is about to rotate in a direction indicated by an arrow m1 under application of the external torque, each acting surface 12d applies a pressing force F to the corresponding lock plate 14, 16 radially outwardly. This brings each braking and locking surface 26 of each lock plate 14, 16 into pressing contact with the braking surface 13 of the housing 11 under a pressing force F1. On the other hand, the frictional forces between the braking and locking surfaces 26 of the lock plates 14, 16 and the braking surface 13 of the housing 11 prevent the pinion shaft 12 from being rotated in the direction of the arrow m1 by the external torque.

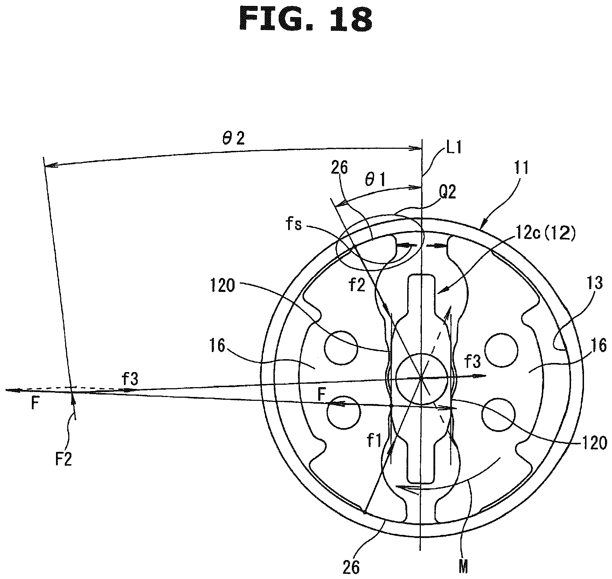

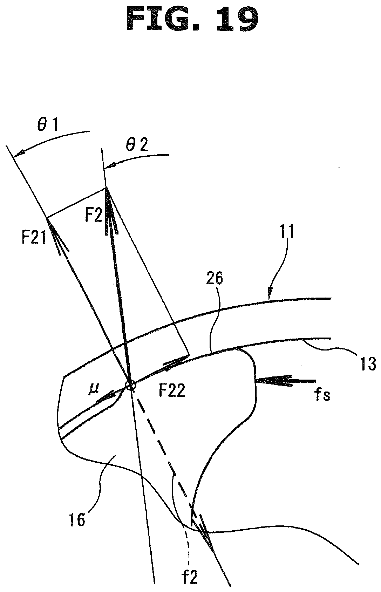

The following discusses a problem described above where repeated input of a load to a seat base due to vehicle vibration and others may cause a change in height position of the seat base against the friction, specifically, a problem that after the height position of the seat base of the motor vehicle seat is adjusted to a specific point by the seat lifter mechanism, for example, one month after the adjustment, the height position of the seat base may have descended significantly from the specific point. FIG. 18 shows a braking section according to a comparative example, corresponding to FIG. 15. For ease of understanding, the same reference numerals are used for the corresponding elements, except for a flat portion 120 of a rectangular shaft part 12c. FIG. 19 shows an enlarged view of a region indicated by Q2 in FIG. 18.

In general, it is conceivable that this problem may be caused by repetition of application of a passenger load to the seat cushion 3 shown in FIG. 1 and also to the pinion shaft 12 under vehicle vibrations and others, which causes gradual slipping and movement between the lock plates 14, 16 and the braking surface 13 of the housing 11. This phenomenon is called gradual seat descent or gradual seat position deviation. According to a study by the present inventor(s), it was discovered that the slipping and movement of the lock plates 14, 16 does not occur under application of a load to the pinion shaft 12, but occurs instantaneously when the load to the pinion shaft 12 is released.

Specifically, as an input torque M is applied inversely to the pinion shaft 12 in the clockwise direction in FIG. 18, each flat surface of the flat portion 120 according to the comparative example presses a pressing force F to a lock plate 16 such that each braking and locking surface 26 of the lock plate 16 is pressed on a braking surface 13 of a housing 11 by a force corresponding to the pressing force F1 shown in in FIG. 15. This pressing force causes an elastic deformation of the housing 11 outwardly.

When the input torque M to the pinion shaft 12 is released, the housing 11 is instantaneously about to be restored from the deformed state to the original state, to push back the braking and locking surfaces 26 of the lock plate 16 by restoring forces f1, f2.

The restoring forces f1, f2 are directed to the pinion shaft 12 to resist the pressing force F. The pinion shaft 12 is restricted also after the load is released, so that the lock plate 16 instantaneously receives the pressing force F and the restoring forces f1, f2. This causes the lock plate 16 to be about to move in the direction of a resultant force of these three forces.

As shown in FIG. 18, the resultant of the restoring forces f1, f2 is a resultant force f3, and the resultant of the resultant force f3 and the pressing force F is a resultant force F2. As shown also in FIG. 19, the resultant force F2 has an angle θ2 with respect to a center line L1 that evenly divides the pinion shaft 12 and passes through the center of the pinion shaft 12 as shown in FIG. 18, wherein the angle θ2 is smaller than an angle θ1 (θ1 > θ2). The angle θ1 is an angle between the center line L1 and a first line that connects the center of the pinion shaft 12 (i.e. the center of the rectangular shaft part 12c) and an initial contact point between the braking and locking surface 26 and the braking surface 13 of the housing 11 under application of the pressing force F. The center line L1 also evenly divides the space between the pair of lock plates 16.

As shown in FIG. 19, the resultant force F2 is composed of a normal force component F21 and a tangential force component F22, wherein the tangential force component F22 serves to move the lock plate 16 along the braking surface 13 of the housing 11. The tangential force component F22 serves to resist a spring force fs of the lock spring 17, and release the braked state.

Conversely, the tangential force component F22 is resisted by the spring force fs of the lock spring 17, and also by a frictional force µ between the lock plate 16 and the braking surface 13 of the housing 11. When the tangential force component F22 exceeds these resistances depending on the relationship among the pressing force F and the restoring forces f1, f2, the lock plate 16 slips and moves with respect to the braking surface 13 of the housing 11. This behavior is true also for the lock plates 14.

This phenomenon is based on the relationship of θ1 > θ2 shown in FIGS. 18 and 19 and also the condition that the difference between the angle θ1 and the angle θ2 is larger than an angle of friction (i.e. a threshold angle within which no slip occurs due to friction) between the lock plate 16 and the braking surface 13 of the housing 11, causing a slip and movement of the lock plate 16. This movement of the lock plate 16 is very small because the elastic deformation of the housing 11 is very small.

The pinion shaft 12 according to the first embodiment serves to solve the problem of gradual seat descent as follows. As shown in FIGS. 7 and 8, each acting surface 12d of the rectangular shaft part 12c of the pinion shaft 12 is formed to include the crest line 112a and the inclined surfaces 112b, to vary the direction of the pressing force F applied from the acting surface 12d to the lock plate 14, 16 when an external torque is inversely inputted to the pinion shaft 12.

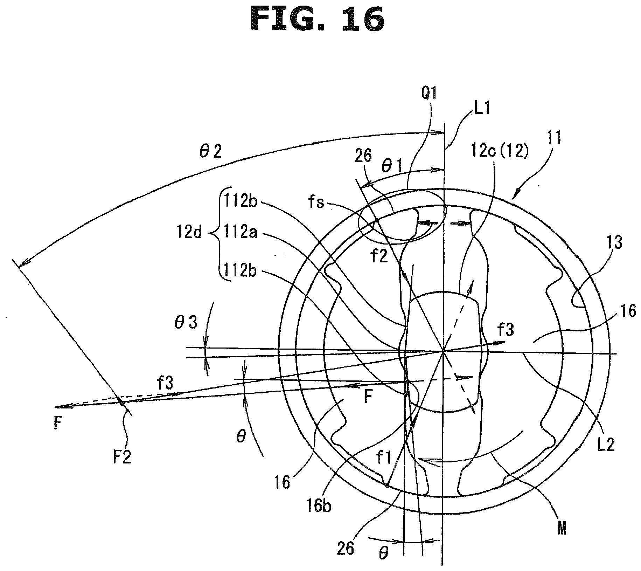

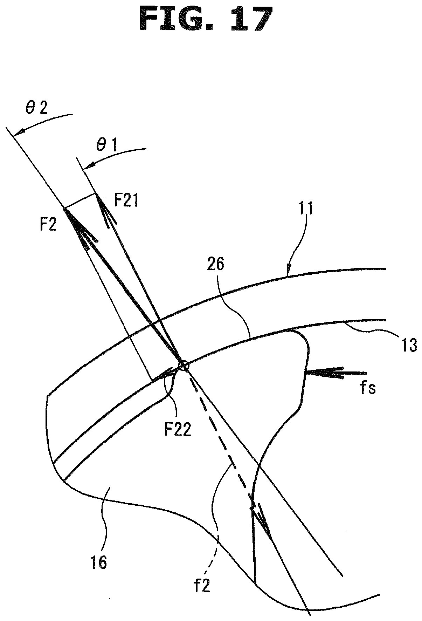

FIG. 16 shows details of the relationship among forces about the lock plates 16. FIG. 17 shows an enlarged view of a region indicated by Q1 in FIG. 16.

As shown in FIGS. 7, 8, and 16, each acting surface 12d of the rectangular shaft part 12c of the pinion shaft 12 is not a simply flat surface, but is composed of the crest line 112a corresponding in position to the center of the rectangular shaft part 12c (i.e. the center of the pinion shaft 12) and the inclined surfaces 112b each of which descends from the crest line 112a toward the radially outward end. Each inclined surface 112b is inclined by an angle θ with respect to the center line L1.

As is clear by comparison with FIG. 18, in the structure shown in FIG. 16, when the input torque M is inversely inputted to the pinion shaft 12 in the clockwise direction, the pressing force F applied from the inclined surface 112b of the acting surface 12d of the rectangular shaft part 12c of the pinion shaft 12 to the protrusion 16b of the lock plate 16 is inclined by the inclination angle θ of the inclined surface 112b, and is thereby directed in a direction inclined downward in FIG. 16 by the inclination angle θ from a line L2 perpendicular to the center line L1.

When the input torque M is not applied, the lock plate 16 is biased by a spring force fs of the lock spring 17, and is thereby inclined by an angle θ3 in the counterclockwise direction about a fulcrum that is a contact point between the inclined surface 112b of the acting surface 12d and the protrusion 16b of the lock plate 16. The inclination angle θ of the inclined surface 112b is greater than the inclination angle θ3 of the lock plate 16 (θ > θ3).

As shown in FIG. 16, the resultant of the restoring forces f1, f2 is a resultant force f3, and the resultant of the pressing force F and the resultant force f3 is a resultant force F2. As shown in FIG. 17, the resultant force F2 has an angle θ2 with respect to the center line L1, wherein the angle θ2 is greater than the angle θ1 (θ1 < θ2).

As shown in FIG. 17, the resultant force F2 is composed of a normal force component F21 and a tangential force component F22, wherein the tangential force component F22 serves to move the lock plate 16 in the circumferential direction along the braking surface 13 of the housing 11. The direction of the tangential force component F22 is opposite to that of FIG. 18, but the same as the spring force fs of the lock spring 17, because of the relationship of θ1 < θ2. As a result, the input torque M is resisted by the tangential force component F22 along with the spring force fs of the lock spring 17, and is thereby prevented from moving the lock plate 16. This behavior is true also for the lock plates 14.

In this way, the relationship in magnitude between the angle θ1 and the angle θ2 according to the first embodiment shown in FIG. 17 is opposite to that according to the comparative example shown in FIG. 19, so that the tangential force component F22 is opposite to the input torque M, and serves to resist the input torque M, and prevent the lock plate 16 from slipping and moving with respect to the braking surface 13 of the housing 11, and thereby prevent gradual seat descent effectively.

The braking section 9 may be of another type that a brake drum is arranged in a housing 11, wherein the brake drum includes a braking surface, as disclosed in JP 2018-090238 A.

The brake device 7 is applied to the seat lifter mechanism, but may be applied to the seat reclining mechanism.

In summary, a brake device (7) for a motor vehicle seat (1), includes: a braking section (9) structured to hold a pinion shaft (12) in a braked and locked state to resist an external torque inputted through the pinion shaft (12); and an operating section (10) structured to release the pinion shaft (12) from the braked and locked state, and rotate the pinion shaft (12), wherein the braking section (9) and the operating section (10) are arranged in an axial direction; wherein: the braking section (9) includes: a housing (11) including an inner periphery including a braking surface (13); the pinion shaft (12) arranged at a central position of the housing (11); a first braking component (16, 17) structured to hold the pinion shaft (12) in the braked and locked state, and including: first and second lock plates (16, 16) arranged opposite to each other with respect to the pinion shaft (12) in the housing (11), wherein each of the first and second lock plates (16, 16) has a substantially semicircular shape, and includes first and second ends, and wherein each of the first and second ends includes a braking and locking surface (26) structured to be in contact with the braking surface (13) of the housing (11); and a lock spring (17) disposed between the second end of the first lock plate (16) and the second end of the second lock plate (16), and structured to apply a biasing force to bias the second end of the first lock plate (16) and the second end of the second lock plate (16) away from each other; and a drive wheel (18) structured to be operated by the operating section (10) to rotate one of the first and second lock plates (16, 16) in a direction to release the pinion shaft (12) from the braked and locked state against the biasing force of the lock spring (17), and rotate the pinion shaft (12); the pinion shaft (12) includes a rectangular shaft part (12c) disposed between the first and second lock plates (16), wherein the rectangular shaft part (12c) includes an acting surface (12d) structured to be in contact with the first lock plate (16); the first lock plate (16) includes an inner peripheral surface including first and second protrusions (16a, 16b) structured to be in contact with the acting surface (12d) of the rectangular shaft part (12c) of the pinion shaft (12) at corresponding ones of two contact points that are opposite to each other along a center line (L1) with respect to a center of the pinion shaft (12), wherein the center line (L1) is a line evenly dividing a space between the first lock plate (16) and the second lock plate (16); the first lock plate (16) is structured to hold the pinion shaft (12) in the braked and locked state by pressing contact between the braking and locking surfaces (26) of the first lock plate (16) and the braking surface (13) of the housing (11) and pressing contact between the first protrusion (16b) of the first lock plate (16) and the acting surface (12d) of the rectangular shaft part (12c) of the pinion shaft (12), under the biasing force of the lock spring (17); the acting surface (12d) of the rectangular shaft part (12c) of the pinion shaft (12) includes a crest line (112a) corresponding in position to the center of the pinion shaft (12), and an inclined surface (112b) that descends from the crest line (112a) toward a radially outward end of the rectangular shaft part (12c); and the inclined surface (112b) is set to satisfy a mathematical expression of θ1 < θ2, wherein: θ1 represents an angle between the center line (L1) and a first line, wherein the first line connects the center of the pinion shaft (12) with an initial contact point between the braking and locking surface (26) of the second end of the first lock plate (16) and the braking surface (13) of the housing (11) when the braking and locking surface (26) of the second end of the first lock plate (16) is pushed by the acting surface (12d) of the rectangular shaft part (12c) of the pinion shaft (12); and θ2 represents an angle between the center line (L1) and a direction of a resultant force (F2) of a pressing force (F), a first restoring force (f1), and a second restoring force (f2), wherein the pressing force (F) is a force applied from the acting surface (12d) of the rectangular shaft part (12c) of the pinion shaft (12) to the first protrusion (16b) of the first lock plate (16) under the external torque inputted to the pinion shaft (12), wherein the first restoring force (f1) is a force applied from the braking surface (13) of the housing (11) to the braking and locking surface (26) of the first end of the first lock plate (16) under application of the pressing force (F), and wherein the second restoring force (f2) is a force applied from the braking surface (13) of the housing (11) to the braking and locking surface (26) of the second end of the first lock plate (16) under application of the pressing force (F). The brake device (7) is configured such that: the rectangular shaft part (12c) of the pinion shaft (12) has a shape symmetric about the center line (L1); the first lock plate (16) is structured to be inclined by a first angle (θ3) with respect to the center line (L1) by the biasing force of the lock spring (17) such that one of the first and second protrusions (16b) of the first lock plate (16) farther from the lock spring (17) is in contact with the acting surface (12d) of the rectangular shaft part (12c) of the pinion shaft (12), when the pinion shaft (12) is held in the braked and locked state; and the inclined surface (112b) of the acting surface (12d) has an inclination angle (θ) greater than the first angle (θ3). The brake device (7) is configured such that the second lock plate (16) is structured similar to the first lock plate (16) such that the first lock plate (16) and the second lock plate (16) are symmetric with respect to the center line (L1). The brake device (7) further includes a second braking component (14, 15) structured similar to the first braking component (16, 17) such that the first braking component (16, 17) and the second braking component (14, 15) are symmetric with respect to a line perpendicular to the center line (L1), and the second braking component (14, 15) includes a lock spring (15) located opposite to the lock spring (17) of the first braking component (16, 17), wherein the first braking component (16, 17) and the second braking component (14, 15) are arranged in the axial direction in the housing (11).

Although the invention has been described above by reference to certain embodiments of the invention, the invention is not limited to the embodiments described above. The scope of the invention is defined with reference to the following claims.

## Claims

1. A brake device (7) for a motor vehicle seat (1), comprising:
a braking section (9) structured to hold a pinion shaft (12) in a braked and locked state to resist an external torque inputted through the pinion shaft (12); and
an operating section (10) structured to release the pinion shaft (12) from the braked and locked state, and rotate the pinion shaft (12), wherein the braking section (9) and the operating section (10) are arranged in an axial direction;
wherein:
the braking section (9) includes:
a housing (11) including an inner periphery including a braking surface (13);
the pinion shaft (12) arranged at a central position of the housing (11);
a first braking component (16, 17) structured to hold the pinion shaft (12) in the braked and locked state, and including:
first and second lock plates (16, 16) arranged opposite to each other with respect to the pinion shaft (12) in the housing (11), wherein each of the first and second lock plates (16, 16) has a substantially semicircular shape, and includes first and second ends, and wherein each of the first and second ends includes a braking and locking surface (26) structured to be in contact with the braking surface (13) of the housing (11); and
a lock spring (17) disposed between the second end of the first lock plate (16) and the second end of the second lock plate (16), and structured to apply a biasing force to bias the second end of the first lock plate (16) and the second end of the second lock plate (16) away from each other; and
a drive wheel (18) structured to be operated by the operating section (10) to rotate one of the first and second lock plates (16, 16) in a direction to release the pinion shaft (12) from the braked and locked state against the biasing force of the lock spring (17), and rotate the pinion shaft (12);
the pinion shaft (12) includes a rectangular shaft part (12c) disposed between the first and second lock plates (16), wherein the rectangular shaft part (12c) includes an acting surface (12d) structured to be in contact with the first lock plate (16);
the first lock plate (16) includes an inner peripheral surface including first and second protrusions (16a, 16b) structured to be in contact with the acting surface (12d) of the rectangular shaft part (12c) of the pinion shaft (12) at corresponding ones of two contact points that are opposite to each other along a center line (L1) with respect to a center of the pinion shaft (12), wherein the center line (L1) is a line evenly dividing a space between the first lock plate (16) and the second lock plate (16);
the first lock plate (16) is structured to hold the pinion shaft (12) in the braked and locked state by pressing contact between the braking and locking surfaces (26) of the first lock plate (16) and the braking surface (13) of the housing (11) and pressing contact between the first protrusion (16b) of the first lock plate (16) and the acting surface (12d) of the rectangular shaft part (12c) of the pinion shaft (12), under the biasing force of the lock spring (17);
the acting surface (12d) of the rectangular shaft part (12c) of the pinion shaft (12) includes a crest line (112a) corresponding in position to the center of the pinion shaft (12), and an inclined surface (112b) that descends from the crest line (112a) toward a radially outward end of the rectangular shaft part (12c); and
the inclined surface (112b) is set to satisfy a mathematical expression of θ1 < θ2, wherein:
θ1 represents an angle between the center line (L1) and a first line, wherein the first line connects the center of the pinion shaft (12) with an initial contact point between the braking and locking surface (26) of the second end of the first lock plate (16) and the braking surface (13) of the housing (11) when the braking and locking surface (26) of the second end of the first lock plate (16) is pushed by the acting surface (12d) of the rectangular shaft part (12c) of the pinion shaft (12); and
θ2 represents an angle between the center line (L1) and a direction of a resultant force (F2) of a pressing force (F), a first restoring force (f1), and a second restoring force (f2), wherein the pressing force (F) is a force applied from the acting surface (12d) of the rectangular shaft part (12c) of the pinion shaft (12) to the first protrusion (16b) of the first lock plate (16) under the external torque inputted to the pinion shaft (12), wherein the first restoring force (f1) is a force applied from the braking surface (13) of the housing (11) to the braking and locking surface (26) of the first end of the first lock plate (16) under application of the pressing force (F), and wherein the second restoring force (f2) is a force applied from the braking surface (13) of the housing (11) to the braking and locking surface (26) of the second end of the first lock plate (16) under application of the pressing force (F).

2. The brake device (7) as claimed in Claim 1, wherein:
the rectangular shaft part (12c) of the pinion shaft (12) has a shape symmetric about the center line (L1);
the first lock plate (16) is structured to be inclined by a first angle (θ3) with respect to the center line (L1) by the biasing force of the lock spring (17) such that one of the first and second protrusions (16b) of the first lock plate (16) farther from the lock spring (17) is in contact with the acting surface (12d) of the rectangular shaft part (12c) of the pinion shaft (12), when the pinion shaft (12) is held in the braked and locked state; and
the inclined surface (112b) of the acting surface (12d) has an inclination angle (θ) greater than the first angle (θ3).

3. The brake device (7) as claimed in Claim 1, wherein the second lock plate (16) is structured similar to the first lock plate (16) such that the first lock plate (16) and the second lock plate (16) are symmetric with respect to the center line (L1).

4. The brake device (7) as claimed in Claim 1, further comprising a second braking component (14, 15) structured similar to the first braking component (16, 17) such that the first braking component (16, 17) and the second braking component (14, 15) are symmetric with respect to a line perpendicular to the center line (L1), and the second braking component (14, 15) includes a lock spring (15) located opposite to the lock spring (17) of the first braking component (16, 17), wherein the first braking component (16, 17) and the second braking component (14, 15) are arranged in the axial direction in the housing (11).

## Patentansprüche

1. Bremsvorrichtung (7) für einen Kraftfahrzeugsitz (1), umfassend:
einen Bremsabschnitt (9), der so aufgebaut ist, dass er eine Ritzelwelle (12) in einem gebremsten und arretierten Zustand hält, um einem über die Ritzelwelle (12) eingeleiteten externen Drehmoment Widerstand entgegenzusetzen; sowie
einen Betätigungsabschnitt (10), der so aufgebaut ist, dass er die Ritzelwelle (12) aus dem gebremsten und arretierten Zustand löst und die Ritzelwelle (12) dreht, wobei der Bremsabschnitt (9) und der Betätigungsabschnitt (10) in einer axialen Richtung angeordnet sind;
wobei:
der Bremsabschnitt (9) enthält:
ein Gehäuse (11), das einen Innenumfang enthält, der eine Bremsfläche (13) einschließt;
die Ritzelwelle (12), die an einer mittigen Position des Gehäuses (11) angeordnet ist;
eine erste Bremskomponente (16, 17), die so aufgebaut ist, dass sie die Ritzelwelle (12) in dem gebremsten und arretierten Zustand hält, und die enthält:
eine erste und eine zweite Arretierplatte (16, 16), die in Bezug auf die Ritzelwelle (12) einander gegenüberliegend in dem Gehäuse (11) angeordnet sind, wobei die erste und die zweite Arretierplatte (16, 16) jeweils eine im Wesentlichen halbkreisartige Form haben und ein erstes sowie ein zweites Ende umfassen und jedes der ersten und der zweiten Enden eine Brems-und-Arretier-Fläche (26) enthält, die so aufgebaut ist, dass sie mit der Bremsfläche (13) des Gehäuses (11) in Kontakt kommt; sowie
eine Arretierfeder (17), die zwischen dem zweiten Ende der ersten Arretierplatte (16) und dem zweiten Ende der zweiten Arretierplatte (16) angeordnet und so aufgebaut ist, dass sie eine Vorspannkraft ausübt, um das zweite Ende der ersten Arretierplatte (16) und das zweite Ende der zweiten Arretierplatte (16) voneinander weg vorzuspannen; und
ein Antriebsrad (18), das so aufgebaut ist, dass es durch den Betätigungsabschnitt (10) betätigt wird und eine von der ersten und der zweiten Arretierplatte (16, 16) in einer Richtung dreht, in der die Ritzelwelle (12) gegen die Vorspannkraft der Arretierfeder (17) aus dem gebremsten und arretierten Zustand gelöst wird, und die Ritzelwelle (12) dreht;
die Ritzelwelle (12) einen rechteckigen Wellenteil (12c) enthält, der zwischen der ersten und der zweiten Arretierplatte (16) angeordnet ist, wobei der rechteckige Wellenteil (12c) eine wirkende Fläche (12d) aufweist, die so aufgebaut ist, dass sie in Kontakt mit der ersten Arretierplatte (16) ist;
die erste Arretierplatte (16) eine Innenumfangsfläche enthält, die einen ersten und einen zweiten Vorsprung (16a, 16b) einschließt, die so aufgebaut sind, dass sie mit der wirkenden Fläche (12d) des rechteckigen Wellenteils (12c) der Ritzelwelle (12) an entsprechenden von zwei Kontaktpunkten in Kontakt kommen, die einander entlang einer Mittellinie (L1) in Bezug auf eine Mitte der Ritzelwelle (12) gegenüberliegen, wobei die Mittellinie (L1) eine Linie ist, die einen Raum zwischen der ersten Arretierplatte (16) und der zweiten Arretierplatte (16) gleichmäßig unterteilt;
die erste Arretierplatte (16) so aufgebaut ist, dass sie die Ritzelwelle (12) durch Drucckontakt zwischen den Brems-und-Arretier-Flächen (26) der ersten Arretierplatte (16) und der Bremsfläche (13) des Gehäuses (11) sowie Druckkontakt zwischen dem ersten Vorsprung (16b) der ersten Arretierplatte (16) und der wirkenden Fläche (12d) des rechteckigen Wellenteils (12c) der Ritzelwelle (12) aufgrund der Vorspannkraft der Arretierfeder (17) in dem gebremsten und arretierten Zustand hält;
die wirkende Fläche (12d) des rechteckigen Wellenteils (12c) der Ritzelwelle (12) eine Scheitellinie (112a), deren Position der Mitte der Ritzelwelle (12) entspricht, und eine geneigte Fläche (112b) einschließt, die von der Scheitellinie (112a) zu einem radial außen liegenden Ende des rechteckigen Wellenteils (12c) hin abfällt; und
die geneigte Fläche (112b) so eingestellt ist, dass ein mathematischer Ausdruck θ1 < θ2 gilt, wobei:
θ1 für einen Winkel zwischen der Mittellinie (L1) und einer ersten Linie steht, wobei die erste Linie die Mitte der Ritzelwelle (12) mit einem anfänglichen Kontaktpunkt zwischen der Brems-und-Arretier-Fläche (26) des zweiten Endes der ersten Arretierplatte (16) und der Bremsfläche (13) des Gehäuses (11) verbindet, wenn die wirkende Fläche (12d) des rechteckigen Wellenteils (12c) der Ritzelwelle (12) auf die Brems-und-Arretier-Fläche (26) des zweiten Endes der ersten Arretierplatte (16) drückt; und
θ2 für einen Winkel zwischen der Mittellinie (L1) und einer Richtung einer resultierenden Kraft (F2) aus einer Presskraft (F), einer ersten Rückstellkraft (f1) und einer zweiten Rückstellkraft (f2) steht, wobei die Presskraft (F) eine Kraft ist, die von der wirkenden Fläche (12d) des rechteckigen Wellenteils (12c) der Ritzelwelle (12) auf den ersten Vorsprung (16b) der ersten Arretierplatte (16) bei dem in die Ritzelwelle (12) eingeleiteten externen Drehmoment ausgeübt wird, die erste Rückstellkraft (f1) eine Kraft ist, die von der Bremsfläche (13) des Gehäuses (11) auf die Brems-und-Arretier-Fläche (26) des ersten Endes der ersten Arretierplatte (16) bei Ausübung der Presskraft (F) ausgeübt wird, und die zweite Rückstellkraft (f2) eine Kraft ist, die von der Bremsfläche (13) des Gehäuses (11) auf die Brems-und-Arretier-Fläche (26) des zweiten Endes der ersten Arretierplatte (16) bei Ausübung der Presskraft (F) ausgeübt wird.

2. Bremsvorrichtung (7) nach Anspruch 1, wobei:
der rechteckige Wellenteil (12c) der Ritzelwelle (12) eine Form hat, die um die Mittellinie (L1) herum symmetrisch ist;
die erste Arretierplatte (16) so aufgebaut ist, dass sie durch die Vorspannkraft der Arretierfeder (17) so um einen ersten Winkel (θ3) in Bezug auf die Mittellinie (L1) geneigt wird, dass von dem ersten und dem zweiten Vorsprung (16b) der ersten Arretierplatte (16) derjenige, der weiter von der Arretierfeder (17) entfernt ist, in Kontakt mit der wirkenden Fläche (12d) des rechteckigen Wellenteils (12c) der Ritzelwelle (12) ist, wenn die Ritzelwelle (12) in dem gebremsten und arretierten Zustand gehalten wird; und
die geneigte Fläche (112b) der wirkenden Fläche (12d) einen Neigungswinkel (θ) hat, der größer ist als der erste Winkel (θ3).

3. Bremsvorrichtung (7) nach Anspruch 1, wobei die zweite Arretierplatte (16) ähnlich aufgebaut ist wie die erste Arretierplatte (16), so dass die erste Arretierplatte (16) und die zweite Arretierplatte (16) symmetrisch in Bezug auf die Mittellinie (L1) sind.

4. Bremsvorrichtung (7) nach Anspruch 1, die des Weiteren eine zweite Bremskomponente (14, 15) umfasst, die ähnlich aufgebaut ist wie die erste Bremskomponente (16, 17), so dass die erste Bremskomponente (16, 17) und die zweite Bremskomponente (14, 15) symmetrisch in Bezug auf eine Linie senkrecht zu der Mittellinie (L1) sind, die zweite Bremskomponente (14, 15) eine Arretierfeder (15) einschließt, die der Arretierfeder (17) der ersten Bremskomponente (16, 17) gegenüberliegt, und die erste Bremskomponente (16, 17) und die zweite Bremskomponente (14, 15) in der axialen Richtung in dem Gehäuse (11) angeordnet sind.

## Revendications

1. Dispositif de frein (7) pour un siège de véhicule motorisé (1), comprenant :
une section de freinage (9) structurée pour maintenir un axe de pignon (12) dans un état freiné et verrouillé pour résister à un couple externe appliqué via l'axe de pignon (12) ; et
une section d'actionnement (10) structurée pour libérer l'axe de pignon (12) de l'état freiné et verrouillé et pour faire tourner l'axe de pignon (12), dans lequel la section de freinage (9) et la section d'actionnement (10) sont agencées en direction axiale ;
dans lequel :
la section de freinage (9) comprend :
un boîtier (11) qui comprend une périphérie interne comportant une surface de freinage (13) ;
l'axe de pignon (12) agencé à une position centrale du boîtier (11) ;
un premier composant de freinage (16, 17) structuré pour maintenir l'axe de pignon (12) dans l'état freiné et verrouillé, et comprenant :
des première et deuxième plaques de verrouillage (16, 16) agencées à l'opposé l'une de l'autre par rapport à l'axe de pignon (12) dans le boîtier (11), dans lequel chacune des première et deuxième plaques de verrouillage (16, 16) présente une forme substantiellement semi-circulaire, et comprend des première et deuxième extrémités, et dans lequel chacune des première et deuxième extrémités comprend une surface de freinage et de verrouillage (26) structurée pour être en contact avec la surface de freinage (13) du boîtier (11) ; et
un ressort de verrouillage (17) disposé entre la deuxième extrémité de la première plaque de verrouillage (16) et la deuxième extrémité de la deuxième plaque de verrouillage (16), et structuré pour appliquer une force de contrainte pour écarter mutuellement la deuxième extrémité de la première plaque de verrouillage (16) de la deuxième extrémité de la deuxième plaque de verrouillage (16) ; et
une roue d'entraînement (18) structurée pour être actionnée par la section d'actionnement (10) pour faire tourner une plaque parmi la première plaque de verrouillage et la deuxième plaque de verrouillage (16, 16) dans une direction pour libérer l'axe de pignon (12) de l'état freiné et verrouillé contre la force de contrainte du ressort de verrouillage (17) et faire tourner l'axe de pignon (12) ;
l'axe de pignon (12) comprend une partie d'axe rectangulaire (12c) disposée entre les première et deuxième plaques de verrouillage (16), dans lequel la partie d'axe rectangulaire (12c) comprend une surface d'actionnement (12d) structurée pour être en contact avec la première plaque de verrouillage (16) ;
la première plaque de verrouillage (16) comprend une surface périphérique interne comportant des première et deuxième protubérances (16a, 16b) structurées pour être en contact avec la surface d'actionnement (12d) de la partie d'axe rectangulaire (12c) de l'axe de pignon (12) à des points correspondants parmi deux points de contact qui sont opposés entre eux le long d'une ligne centrale (L1) par rapport à un centre de l'axe de pignon (12), dans lequel la ligne centrale (L1) est une ligne qui divise de manière égale un espace entre la première plaque de verrouillage (16) et la deuxième plaque de verrouillage (16) ;
la première plaque de verrouillage (16) est structurée pour maintenir l'axe de pignon (12) dans l'état freiné et verrouillé en poussant en contact entre elles les surfaces de freinage et de verrouillage (26) de la première plaque de verrouillage (16) et la surface de freinage (13) du boîtier (11), et en poussant en contact entre elles la première protubérance (16b) de la première plaque de verrouillage (16) et la surface d'actionnement (12d) de la partie d'axe rectangulaire (12c) de l'axe de pignon (12), sous la force de contrainte du ressort de verrouillage (17) ;
la surface d'actionnement (12d) de la partie d'axe rectangulaire (12c) de l'axe de pignon (12) comprend une ligne de crête (112a) correspondant en position au centre de l'axe de pignon (12), et une surface inclinée (112b) qui descend de la ligne de crête (112a) vers une extrémité radialement externe de la partie d'axe rectangulaire (12c) ; et
la surface inclinée (112b) est réglée pour satisfaire à l'expression mathématique θ1 < θ2, où :
θ1 représente un angle entre la ligne centrale (L1) et une première ligne, dans lequel la première ligne connecte le centre de l'axe de pignon (12) avec un point de contact initial entre la surface de freinage et de verrouillage (26) de la deuxième extrémité de la première plaque de verrouillage (16) et la surface de freinage (13) du boîtier (11) quand la surface de freinage et de verrouillage (26) de la deuxième extrémité de la première plaque de verrouillage (16) est poussée par la surface d'actionnement (12d) de la partie d'axe rectangulaire (12c) de l'axe de pignon (12) ; et
θ2 représente un angle entre la ligne centrale (L1) et une direction d'une force résultante (F2) d'une force de pression (F), d'une première force de rétablissement (f1), et d'une deuxième force de rétablissement (f2), dans lequel la force de pression (F) est une force appliquée par la surface d'actionnement (12d) de la partie d'axe rectangulaire (12c) de l'axe de pignon (12) sur la première protubérance (16b) de la première plaque de verrouillage (16) résultant du couple externe appliqué à l'axe de pignon (12), dans lequel la première force de rétablissement (fl) est une force appliquée par la surface de freinage (13) du boîtier (11) sur la surface de freinage et de verrouillage (26) de la première extrémité de la première plaque de verrouillage (16) par l'application de la force de pression (F), et dans lequel la deuxième force de rétablissement (f2) est une force appliquée par la surface de freinage (13) du boîtier (11) sur la surface de freinage et de verrouillage (26) de la deuxième extrémité de la première plaque de verrouillage (16) par l'application de la force de pression (F).

2. Dispositif de frein (7) selon la revendication 1, dans lequel :
la partie d'axe rectangulaire (12c) de l'axe de pignon (12) présente une forme symétrique autour de la ligne centrale (L1) ;
la première plaque de verrouillage (16) est structurée pour être inclinée d'un premier angle (θ3) par rapport à la ligne centrale (L1) par la force de contrainte du ressort de verrouillage (17) de telle sorte que l'une des première et deuxième protubérances (16b) de la première plaque de verrouillage (16) plus éloignée du ressort de verrouillage (17) est en contact avec la surface d'actionnement (12d) de la partie d'axe rectangulaire (12c) de l'axe de pignon (12), quand l'axe de pignon (12) est maintenu dans l'état freiné et verrouillé ; et
la surface inclinée (112b) de la surface d'actionnement (12d) présente un angle d'inclinaison (θ) supérieur au premier angle (θ3).

3. Dispositif de frein (7) selon la revendication 1, dans lequel la deuxième plaque de verrouillage (16) est structurée de manière similaire à la première plaque de verrouillage (16), de telle sorte que la première plaque de verrouillage (16) et la deuxième plaque de verrouillage (16) sont symétriques par rapport à la ligne centrale (L1).

4. Dispositif de frein (7) selon la revendication 1, comprenant en outre un deuxième composant de freinage (14, 15) structuré de manière similaire au premier composant de freinage (16, 17) de telle sorte que le premier composant de freinage (16, 17) et le deuxième composant de freinage (14, 15) sont symétriques par rapport à une ligne perpendiculaire à la ligne centrale (L1), et le deuxième composant de freinage (14, 15) comprend un ressort de verrouillage (15) situé à l'opposé du ressort de verrouillage (17) du premier composant de freinage (16, 17), dans lequel le premier composant de freinage (16, 17) et le deuxième composant de freinage (14, 15) sont agencés en direction axiale dans le boîtier (11).
